# EUROPÄISCHE PATENTSCHRIFT

(11) **EP 2 271 861 B1**
(45) Veröffentlichungstag und Bekanntmachung des Hinweises auf die Patenterteilung: **29.10.2014**
(21) Anmeldenummer: 09734412.1
(22) Anmeldetag: 24.04.2009
(51) Int. Cl.: F16H 47/04

(54) **LEISTUNGSVERZWEIGUNGSGETRIEBE**
POWER SPLIT TRANSMISSION
TRANSMISSION À DÉRIVATION DE PUISSANCE

(30) Priorität: 25.04.2008 DE 102008021010
(43) Veröffentlichungstag der Anmeldung: 12.01.2011
(73) Patentinhaber: Bosch Rexroth Aktiengesellschaft, 58455 Witten (DE)
(72) Erfinder: CZYMAY, Stefan, 58636 Iserlohn (DE); JANSEN, Jan-Hendrik, 40225 Düsseldorf (DE); MATALLA, Manuel, 57455 Witten (DE); MEISE, Andreas, 44795 Bochum (DE)
(74) Vertreter: Thürer, Andreas
(86) Internationale Anmeldenummer: PCT/EP2009/003011
(87) Internationale Veröffentlichungsnummer: WO 2009/130040

(56) Entgegenhaltungen:
- WO-A-97/32145
- WO-A-2006/042434
- US-A- 3 675 507

## Beschreibung

### Gebiet der Erfindung

Die Erfindung betrifft ein Leistungsverzweigungsgetriebe für ein Kraftfahrzeug mit einem mechanischen und einem hydrostatischen Leistungszweig, welche zueinander parallel angeordnet mit einer gemeinsamen Antriebswelle in Kontakt stehen, wobei der mechanische Leistungszweig ein erstes Planetenradgetriebe, das ein erstes Sonnenrad, das direkt auf der Antriebswelle platziert ist, und erste Planetenräder besitzt, und ein zweites Planetenradgetriebe aufweist, das ein zweites Sonnenrad, zweite Planetenräder, die zu den Planetenrädern des ersten Planetengetriebes koaxial angeordnet und mit diesen auf einem gemeinsamen Planetenträgerwelle gelagert sind, und ein Hohlrad besitzt, wobei der hydrostatische Leistungszweig aus einem mit einer Hydropumpe gekoppelten Hydromotor besteht und über eine Zahnradstufe mit der Antriebswelle verbunden ist, und wobei die verzweigte Leistung aus dem mechanischen und hydrostatischen Leistungszweig in einem stirnseitig angeordneten Rädertrieb zusammenführbar ist, welcher im folgenden mit einer Abtriebswelle verbunden ist.

### Stand der Technik

Aus der WO 2006/042434 A1 ist ein hydrostatisch-mechanisches Leistungsverzweigungsgetriebe der oben skizzierten Art bekannt. Bei diesem ist ein Sonnenrad mit einer Eingangswelle drehfest verbunden ist. Ein zweites Sonnenrad ist drehbar auf der Eingangswelle gelagert. Erste Planetenräder kämmen mit dem ersten Sonnenrad, zweite Planetenräder kämmen mit dem zweiten Sonnenrad, wobei jeweils ein erstes Planetenrad und ein zweites Planetenrad koaxial zueinander angeordnet und auf einer gemeinsamen Planetenträgerwelle gelagert sind. Die zweiten Planetenräder kämmen außer mit dem zweiten Sonnenrad noch mit einem Hohlrad. Im Besonderen steht bei dem aus der WO 2006/042434 bekannten Leistungsverzweigungsgetriebe die Planetenträgerwelle mit dem Rädertrieb in Kontakt, in dem die verzweigte Leistung aus dem mechanischen Leistungszweig und dem hydrostatischen Leistungszweig zusammengeführt sind.

Aus der US 3 675 507 A und aus der WO 97/32145 A sind jeweils hydrostatischmechanische Leistungsverzweigungsgetriebe mit einem Planetenrad-Summierungsgetriebe bekannt. Es ist ein Hohlrad vorhanden, das fest ist und zur Untersetzung der Motordrehzahl dient.

Aus der DE 27 19 823 C2 ist ein leistungsverzweigendes Getriebe bekannt, bei welchem zwischen einer Antriebseinheit mit Antriebswelle und einer Abtriebswelle ein hydrostatischen Getriebe bestehend aus einer Hydropumpe und einem Hydromotor angeordnet ist. Des Weiteren ist über eine Stirnradstufe ein hydrodynamisches Getriebe parallel geschaltet, welches aus einem hydrodynamischen Wandler besteht. Auf der Abtriebsseite des hydrodynamischen Getriebes ist eine weitere Stirnradstufe zur Verbindung mit der Abtriebswelle vorgesehen, wobei das Stirnrad auf Seiten des hydrodynamischen Getriebes über eine Freilaufkupplung mit der Abtriebswelle des hydrodynamischen Wandlers verbunden ist.

Aus der DE 20 2005 021 249 U1 ist des Weiteren ein Leistungsverzweigungsgetriebe für Kraftfahrzeuge bekannt, bei welchem eine mechanische und eine hydrostatische Leistungsverzweigung parallel angeordnet sind. Zwischen einer Antriebswelle und der mechanischen Leistungsverzweigung ist hierbei ein Doppelkupplungsgetriebe vorgesehen, über welches zwei Getriebewellen zuschaltbar sind. Auf diesen Getriebewellen sind jeweils Gleichlaufeinrichtungen vorgesehen, um auf den Getriebewellen angeordnete Losräder mit der jeweiligen Getriebewelle formschlüssig zu verbinden. Durch diese Schaltung der Losräder findet eine Übersetzung der Leistung der Antriebswelle auf eine parallel angeordnete Hohlwelle statt. Innerhalb dieser Hohlwelle ist zudem ein hydrostatischer Leistungszweig angeordnet, welcher über eine Stirnradstufe mit der Antriebswelle in Verbindung steht. Die Leistung aus dem mechanischen Zweig sowie dem hydrostatischen Zweig werden in einem Planetenradgetriebe zusammengefasst, wobei der hydrostatische Leistungszweig mit dem Sonnenrad in Verbindung steht, während die Hohlwelle des mechanischen Leistungszweiges mit dem Hohlrad gekoppelt ist. Die Planetenräder des Planetenradgetriebes sind mit einer Abtriebswelle zum Abführen der Ausgangsleistung des Leistungsverzweigungsgetriebes verbunden.

Nachteilhaft am bekannten Stand der Technik ist, dass bei der Verwendung eines hydrodynamischen Leistungszweigs aufgrund der Erwärmung des Öls Leistungsverluste hinzunehmen sind. Bei der Verwendung eines mechanischen Leistungszweiges mit Stimradstufen ist ein entsprechender axialer Bauraum nötig, welcher bei manchen Fahrzeugen nicht zur Verfügung steht.

### Aufgabenstellung der Erfindung

Es ist daher die Aufgabe der vorliegenden Erfindung, ein Leistungsverzweigungsgetriebe für ein Kraftfahrzeug zu schaffen, welches einen kleinen Bauraum benötigt.

Diese Aufgabe wird ausgehend vom Oberbegriff des Anspruchs 1 in Verbindung mit dessen kennzeichnenden Merkmalen gelöst. Die darauf folgenden abhängigen Ansprüche geben vorteilhafte Weiterbildungen der Erfindung wieder.

Die Erfindung umfasst die technische Lehre, dass der mechanische Leitungszweig aus zwei Planetenradgetrieben besteht, wobei das Sonnenrad des ersten Planetenradgetriebes direkt auf der Antriebswelle platziert ist, während das Sonnenrad des zweiten Planetenradgetriebes über eine Sonnenwelle mittels eines Rädertriebes mit einer Abtriebswelle verbunden ist. Hierbei sind die Planetenräder beider Stufen koaxial angeordnet und auf einer gemeinsamen Planetenträgerwelle gelagert. Durch die Verwendung zweier Planetenradgetriebe ist ein kompakter Aufbau des mechanischen Leistungszweiges möglich und zugleich die über diesen Zweig geleitete Leistung entsprechend steuerbar.

Gemäß einer weiteren vorteilhaften Ausgestaltung der Erfindung ist die Planetenträgerwelle auf der Seite des ersten Planetenradgetriebes über einen Planetensteg in dem Hohlrad des ersten Planetenradgetriebes gelagert, während sie auf der Seite des zweiten Planetenradgetriebes über eine Kupplung direkt mit der Sonnenwelle verbindbar ist. Auf diese Art und Weise wird eine zuverlässige Lagerung der Planetenträgerwelle gewährleistet, wobei über die direkte Verbindung mit der Sonnenwelle des zweiten Planetenradgetriebes eine Wandlung der Leistung durch die zweite Planetenstufe überbrückt werden kann.

In Weiterbildung der Erfindung ist die Kupplung durch einen Zylinder schaltbar, welcher in dem Hohlrad des zweiten Planetenradgetriebes angeordnet ist. Dadurch kann eine sehr kompakte Anordnung zum Schalten der Kupplung realisiert werden.

Gemäß einer weiteren vorteilhaften Ausführungsform der Erfindung weist das Hohlrad des ersten Planetenradgetriebes eine Außenverzahnung auf, über welche es über ein Zahnrad direkt mit einer abtriebsseitigen Welle des hydrostatischen Leistungszweiges gekoppelt ist. Durch diese Maßnahme kann die über das erste Planetenradgetriebe fließende Leistung beeinflusst werden, da die Drehzahl des Hohlrades mit der Drehzahl der abtriebsseitigen Welle des hydrostatischen Zweiges über eine Zahnradstufe gekoppelt ist.

In Weiterbildung der Erfindung verfügt auch das Hohlrad des zweiten Planetenradgetriebes über eine Außenverzahnung, über welche es mittels eines Zahnrades und einer Kupplung direkt mit der abtriebsseitigen Welle des hydrostatischen Leistungszweiges verbindbar ist. In Folge dessen kann auch die über das zweite Planetenradgetriebe geführte Leistung durch den hydrostatischen Leistungszweig beeinflusst werden, wobei hierbei eine gezielte Zuschaltung möglich ist.

Gemäß einer weiteren, vorteilhaften Ausgestaltung der Erfindung ist der hydrostatische Leistungszweig über eine Kupplung mittels des Rädertriebes mit der Abtriebswelle verbindbar. Durch diese Maßnahme kann eine gezielte Zuschaltung des hydrostatischen Zweiges bis zum Antrieb der Abtriebswelle getätigt werden oder auch ein Antrieb der Abtriebswelle rein über den hydrostatischen Zweig erfolgen.

In Weiterbildung der Erfindung sind der Hydromotor und/oder die Hydropumpe regelbar. Dies hat den Vorteil, dass die über dem hydrostatischen Zweig geleitete Leistung gezielt steuerbar ist.

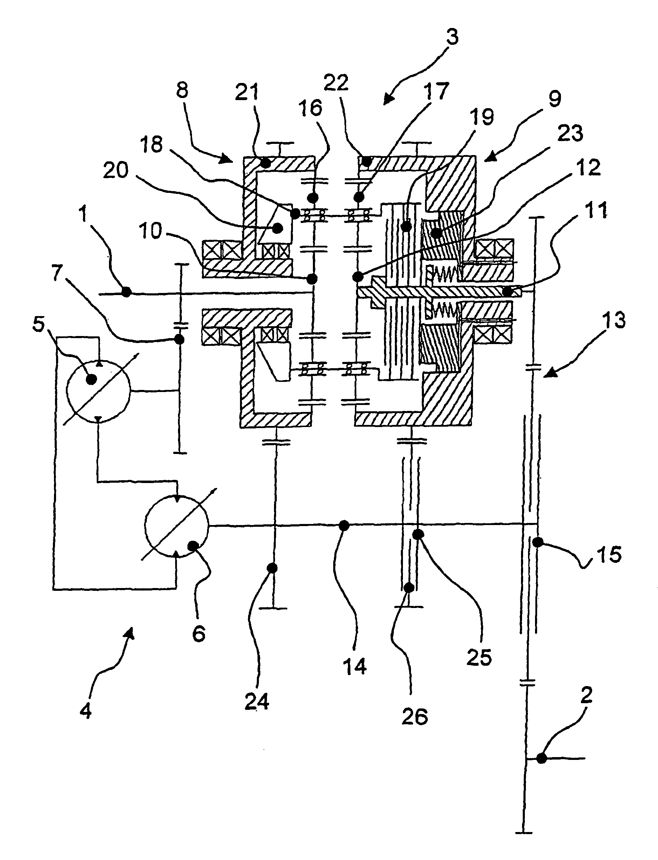

Weitere, die Erfindung verbessernde Maßnahmen werden nachstehend gemeinsam mit der Beschreibung eines Ausführungsbeispiels anhand der Figur näher dargestellt.

### Beschreibung der Zeichnungen

Die einzige Figur zeigt eine schematische Ansicht des erfindungsgemäßen Leistungsverzweigungsgetriebes, welches zwischen einer Antriebeswelle I und eine Abtriebswelle 2 angeordnet ist. Hierbei verfügt das Leistungsverzeigungsgetriebe über einen mechanischen Leistungszweig 3 sowie einen hydrostatischen Zweig 4. Der hydrostatische Zweig 4 weist eine Hydropumpe 5 auf, welche hydraulisch mit einem Hydromotor 6 gekoppelt ist, und steht über eine Stirnradstufe 7 mit der Antriebswelle 1 in Verbindung. Der mechanische Zweig 3 ist aus zwei Planetenradgetrieben 8 und 9 aufgebaut, wobei ein Sonnenrad 10 des ersten Planetenradgetriebes 8 direkt auf der Antriebswelle 1 angeordnet ist. Abtriebsseitig ist eine Sonnenwelle 11, auf welcher das Sonnenrad 12 des zweiten Planetenradgetriebes 9 platziert ist, mittels eines Rädertriebes 13 mit der Abtriebswelle 2 gekoppelt. Auf Seiten des hydrostatischen Zweiges 4 kann eine Verbindung zwischen der abtriebsseitigen Welle 14 und der Abtriebswelle 2 mittels einer schaltbaren Kupplung 15 mit dem Rädertrieb 13 hergestellt werden. Um die über den mechanischen Zweig 3 geführte Leistung entsprechend zu wandeln, sind die Planetenräder 16 und 17 der beiden Planetenradgetriebe 8 und 9 koaxial gemeinsam auf einer Planetenträgerwelle 18 angeordnet. Diese Planetenträgerwelle 18 kann auf Seiten des zweiten Planetenradgetriebes 9 mittels der Schaltkupplung 19 direkt mit der Sonnenwelle 11 verbunden werden, während sie auf Seiten des ersten Planetenradgetriebes 8 über einen Planetensteg 20 im Hohlrad 21 gelagert ist. Zur Betätigung der Schaltkupplung ist im Hohlrad 22 des zweiten Planetenradgetriebes 9 ein Zylinder 23 angeordnet. Die Hohlräder 21 und 22 weisen zudem ihrem Außenumfang jeweils eine Verzahnung auf. Über diese Verzahnung steht Hohlrad 21 über ein Zahnrad 24 permanent mit der abtriebsseitigen Welle 14 des hydrostatischen Zweiges 4 in Verbindung. Über eine weitere Kupplung 25 kann zudem eine Koppelung zwischen der abtriebsseitigen Welle 14 und dem Hohlrad 22 des zweiten Planetenradgetriebes 9 mittels des Zahnrads 26 hergestellt werden.

Mittels der geschilderten Anordnung lässt sich eine Leistungssummierung über drei Wege gestalten:

Zur Gestaltung eines ersten Übersetzungsverhältnisses ist die Kupplung 15 geschlossen, während die beiden Kupplungen 19 und 25 geöffnet sind. In diesem Fall erfolgt der Kraftfluss über den hydrostatischen Zweig 4, da im Bereich des mechanischen Zweiges 3 aufgrund des frei rotierenden Hohlrades 22 keine Leistungsübertragung erfolgt.

Zur Gestaltung eines zweiten Übersetzungsverhältnisses ist die Schaltkupplung 19 geschlossen, während die beiden anderen Kupplungen 15 und 25 geöffnet sind. Im ersten Planetenradgetriebe 8 erfolgt eine Bündelung des Kraftflusses, welcher sich zum Einen aus dem über das Sonnenrad 10 eingebrachten Teil und zum Anderen aus einem Antrieb des Hohlrades 21 durch den hydrostatischen Zweig 4 über das Zahnrad 24 zusammensetzt. Diese aufsummierte Leistung wird aufgrund der geschlossenen Kupplung 19 mittels der Planetenträgerwelle 18 direkt auf die Sonnenwelle 11 und durch den Rädertrieb 13 zur Abtriebswelle 2 übertragen.

Ein weiteres Übersetzungsverhältnis ist darstellbar, indem die Kupplung 25 geschlossen wird, während die Kupplungen 15 und 19 geöffnet bleiben. In diesem Fall werden die Hohlräder 21 und 22 jeweils über den hydrostatischen Zweig 4 betrieben, so dass im ersten Planetenradgetriebe 8 eine Summierung der Leistung aus Sonnenrad 10 und Hohlrad 21 erfolgt, was über die Planetenträgerwelle 18 zum zweiten Planetenradgetriebe 9 übertragen wird. Im zweiten Planetenradgetriebe 9 wird diese Leistung gemeinsam mit dem Kraftfluss über Hohlrad 22 gebündelt und schließlich auf die Sonnenwelle 11 übertragen. Ausgehend von der Sonnenwelle 11 wird letztendlich die Leistung über den Rädertrieb 13 an die Abtriebswelle 2 abgegeben.

### Bezugszeichenliste

- 1: Antriebswelle
- 2: Abtriebswelle
- 3: mechanischer Leistungszweig
- 4: hydrostatischer Leistungszweig
- 5: Hydropumpe
- 6: Hydromotor
- 7: Stirnradstufe
- 8: erstes Planetenradgetriebe
- 9: zweites Planetenradgetriebe
- 10: Sonnenrad
- 11: Sonnenwelle
- 12: Sonnenrad
- 13: Rädertrieb
- 14: abtriebsseitige Welle
- 15: Kupplung
- 16: Planetenrad
- 17: Planetenrad
- 18: Planetenträgerwelle
- 19: Schaltkupplung
- 20: Planetensteg
- 21: Hohlrad
- 22: Hohlrad
- 23: Zylinder
- 24: Zahnrad
- 25: Kupplung
- 26: Zahnrad

## Patentansprüche

1. Leistungsverzweigungsgetriebe für ein Kraftfahrzeug mit einem mechanischen und einem hydrostatischen Leistungszweig (3, 4), welche zueinander parallel angeordnet mit einer gemeinsamen Antriebswelle (1) in Kontakt stehen, wobei der mechanische Leistungszweig (3) ein erstes Planetenradgetriebe (8), das ein erstes Sonnenrad (10), das direkt auf der Antriebswelle (1) platziert ist, und erste Planetenräder (16) besitzt, und ein zweites Planetenradgetriebe (9) aufweist, das ein zweites Sonnenrad (12), zweite Planetenräder (17), die zu den Planetenrädern (16) des ersten Planetengetriebes (8) koaxial angeordnet und mit diesen auf einem gemeinsamen Planetenträgerwelle (18) gelagert sind, und ein Hohlrad (22) besitzt, wobei der hydrostatische Leistungszweig (4) aus einem mit einer Hydropumpe (5) gekoppelten Hydromotor (6) besteht und über eine Zahnradstufe (7) mit der Antriebswelle (1) verbunden ist, wobei die verzweigte Leistung aus dem mechanischen und hydrostatischen Leistungszweig (3, 4) in einem stirnseitig angeordneten Rädertrieb (13) zusammenführbar ist, welcher im folgenden mit einer Abtriebswelle (2) verbunden ist,
**dadurch gekennzeichnet, dass** auch das erste Planetengetriebe (8) ein Hohlrad (21) aufweist und das das Sonnenrad (12) des zweiten Planetenradgetriebes (9) über eine Sonnenwelle (11) mit dem Rädertrieb (13) in Kontakt steht.

2. Leistungsverzweigungsgetriebe nach Anspruch 1,
**dadurch gekennzeichnet, dass** die Planetenträgerwelle (18) auf der Seite des ersten Planetenradgetriebes (8) über einen Planetensteg (20) in dem Hohlrad (21) des ersten Planetenradgetriebes (8) gelagert ist, während sie auf der Seite des zweiten Planetenradgetriebes (9) über eine Kupplung (19) direkt mit der Sonnenwelle (11) verbindbar ist.

3. Leistungsverzweigungsgetriebe nach Anspruch 2,
**dadurch gekennzeichnet, dass** die Kupplung (19) durch einen Zylinder (23) schaltbar ist, welcher in dem Hohlrad (22) des zweiten Planetenradgetriebes (9) angeordnet ist.

4. Leistungsverzeigungsgetriebe nach einem der Ansprüche 1-3,
**dadurch gekennzeichnet, dass** das Hohlrad (21) des ersten Planetenradgetriebes (8) eine Außenverzahnung aufweist, über welche es über ein Zahnrad (24) direkt mit einer abtriebsseitigen Welle (14) des hydrostatischen Leistungszweiges (4) gekoppelt ist.

5. Leistungsverzweigungsgetriebe nach einem der Ansprüche 1-4,
**dadurch gekennzeichnet, dass** auch das Hohlrad (22) des zweiten Planetenradgetriebes (9) über eine Außenverzahnung verfügt, über welche es mittels eines Zahnrads (26) und einer Kupplung (25) direkt mit der abtriebsseitigen Welle (14) des hydrostatischen Leistungszweiges (4) verbindbar ist.

6. Leistungsverzweigungsgetriebe nach einem der vorhergehenden Ansprüche,
**dadurch gekennzeichnet, dass** der hydrostatische Leistungszweig (4) über eine Kupplung (15) mittels des Rädertriebes (13) mit der Abtriebswelle (2) verbindbar ist.

7. Leistungsverzweigungsgetriebe nach einem der vorhergehenden Ansprüche,
**dadurch gekennzeichnet, dass** der Hydromotor (6) und/oder die Hydropumpe (5) regelbar sind.

8. Antriebsstrang eines Kraftfahrzeuges, umfassend ein Leistungsverzweigungsgetriebe nach einem der Ansprüche 1-7.

## Claims

1. Power split transmission for a motor vehicle, with a mechanical and a hydrostatic power branch (3, 4) which, arranged parallel to one another, are in contact with a common drive shaft (1), the mechanical power branch (3) having a first planetary gear (8), which possesses a first sun wheel (10), placed directly on the drive shaft (1), and first planet wheels (16), and a second planetary gear (9), which possesses a second sun wheel (12), second planet wheels (17), which are arranged coaxially to the planet wheels (16) of the first planetary gear (8) and are mounted together with these on a common planet carrier shaft (18), and a ring wheel (22), the hydrostatic power branch (4) consisting of a hydraulic motor (6), which is coupled to a hydraulic pump (5), and being connected to the drive shaft (1) via a gearwheel stage (7), the split power from the mechanical and the hydrostatic power branch (3, 4) being combinable in a wheel train (13) which is arranged on the end face and which is subsequently connected to an output shaft (2), **characterized in that** the first planetary gear (8) also has a ring wheel (21), and **in that** the sun wheel (12) of the second planetary gear (9) is in contact with the wheel train (13) via a sun shaft (11).

2. Power split transmission according to Claim 1,
**characterized in that** the planet carrier shaft (18) is mounted, on the side of the first planetary gear (8), in the ring wheel (21) of the first planetary gear (8) via a planet web (20), while, on the side of the second planetary gear (9), the said planet carrier shaft is connectable directly to the sun shaft (11) via a clutch (19).

3. Power split transmission according to Claim 2,
**characterized in that** the clutch (19) is shiftable by means of a cylinder (23) which is arranged in the ring wheel (22) of the second planetary gear (9) .

4. Power split transmission according to one of Claims 1-3,
**characterized in that** the ring wheel (21) of the first planetary gear (8) has an external toothing, via which it is coupled directly via a gearwheel (24) to an output-side shaft (14) of the hydrostatic power branch (4).

5. Power split transmission according to one of Claims 1-4,
**characterized in that** the ring wheel (22) of the second planetary gear (9) also has an external toothing, via which it is connectable directly to the output-side shaft (14) of the hydrostatic power branch (4) by means of a gearwheel (26) and a clutch (25).

6. Power split transmission according to one of the preceding claims,
**characterized in that** the hydrostatic power branch (4) is connectable to the output shaft (2) by means of the wheel train (13) via a clutch (15).

7. Power split transmission according to one of the preceding claims,
**characterized in that** the hydraulic motor (6) and/or the hydraulic pump (5) are/is regulatable.

8. Drive train of a motor vehicle, comprising a power split transmission according to one of Claims 1-7.

## Revendications

1. Transmission à dérivation de puissance pour un véhicule automobile, comprenant une branche de puissance mécanique et une branche de puissance hydrostatique (3, 4), lesquelles sont disposées parallèlement l'une à l'autre et sont en contact avec un arbre d'entraînement commun (1), la branche de puissance mécanique (3) comprenant une première transmission planétaire (8) qui présente une première roue solaire (10), qui est placée directement sur l'arbre d'entraînement (1), et des premières roues planétaires (16), et une deuxième transmission planétaire (9) qui présente une deuxième roue solaire (12), des deuxièmes roues planétaires (17), qui sont disposées de manière coaxiale aux roues planétaires (16) de la première transmission planétaire (8) et sont montées avec celles-ci sur un arbre de porte-planétaire commun (18), et une couronne (22), la branche de puissance hydrostatique (4) étant constituée d'un moteur hydraulique (6) accouplé à une pompe hydraulique (5) et étant reliée à l'arbre d'entraînement (1) par le biais d'un étage à roues dentées (7), la puissance bifurquée provenant de la branche de puissance mécanique et de la branche de puissance hydrostatique (3, 4) pouvant être rassemblée dans un entraînement par engrenages (13) disposé du côté frontal, lequel est ensuite relié à un arbre de sortie (2), **caractérisée en ce que** la première transmission planétaire (8) comprend également une couronne (21) et **en ce que** la roue solaire (12) de la deuxième transmission planétaire (9) est en contact avec l'entraînement par engrenages (13) par le biais d'un arbre solaire (11).

2. Transmission à dérivation de puissance selon la revendication 1,
**caractérisée en ce que** l'arbre de porte-planétaire (18) est monté, du côté de la première transmission planétaire (8), dans la couronne (21) de la première transmission planétaire (8) par le biais d'un porte-planétaire (20), tandis qu'il peut être relié directement à l'arbre solaire (11), par le biais d'un embrayage (19), du côté de la deuxième transmission planétaire (9).

3. Transmission à dérivation de puissance selon la revendication 2,
**caractérisée en ce que** l'embrayage (19) peut être commuté par un cylindre (23) qui est disposé dans la couronne (22) de la deuxième transmission planétaire (9).

4. Transmission à dérivation de puissance selon l'une quelconque des revendications 1 à 3,
**caractérisée en ce que** la couronne (21) de la première transmission planétaire (8) comprend une denture extérieure par le biais de laquelle elle est accouplée directement, par le biais d'une roue dentée (24), à un arbre (14) côté sortie de la branche de puissance hydrostatique (4).

5. Transmission à dérivation de puissance selon l'une quelconque des revendications 1 à 4,
**caractérisée en ce que** la couronne (22) de la deuxième transmission planétaire (9) possède également une denture extérieure par le biais de laquelle elle peut être reliée, au moyen d'une roue dentée (26) et d'un embrayage (25), directement à l'arbre (14) côté sortie de la branche de puissance hydrostatique (4).

6. Transmission à dérivation de puissance selon l'une quelconque des revendications précédentes,
**caractérisée en ce que** la branche de puissance hydrostatique (4) peut être reliée à l'arbre de sortie (2) par le biais d'un embrayage (15) au moyen de l'entraînement par engrenages (13).

7. Transmission à dérivation de puissance selon l'une quelconque des revendications précédentes,
**caractérisée en ce que** le moteur hydraulique (6) et/ou la pompe hydraulique (5) est/sont réglable(s).

8. Chaîne cinématique d'un véhicule automobile, comportant une transmission à dérivation de puissance selon l'une quelconque des revendications 1 à 7.
